Europäisches Patentamt

European Patent Office

Office européen des brevets

(11) Publication number: **0 322 123 A2**

(12) **EUROPEAN PATENT APPLICATION**

(21) Application number: **88311277.3**

(22) Date of filing: **29.11.88**

(51) Int. Cl.⁴: **G06F 15/40**

(30) Priority: **23.12.87 US 138539**

(43) Date of publication of application:
**28.06.89 Bulletin 89/26**

(84) Designated Contracting States:
**BE CH DE ES FR GB IT LI NL SE**

(71) Applicant: **International Business Machines Corporation**
**Old Orchard Road**
**Armonk, N.Y. 10504(US)**

(72) Inventor: **Macphail, Margaret Gardner**
**2105 Tower Drive**
**Austin Texas 78703(US)**

(74) Representative: **Hawkins, Anthony George Frederick**
**IBM United Kingdom Limited Intellectual Property Department Hursley Park**
**Winchester Hampshire SO21 2JN(GB)**

(54) **A method of operating an electronic information processing system for managing documents therein.**

(57) A method of generating a folder, which is comprising a plurality of documents, in an information processing system. An end user indicates the documents to be included in the folder, any search criteria, access control information, the logical relationship of the documents and the identification of the end user and/or the principal. The system then creates the folder and includes the specified documents therein in the order specified by the end user. Thereafter, when the folder can be requested, the documents will be transmitted therewith in the order established.

FIG. 1

# A METHOD OF OPERATING AN ELECTRONIC INFORMATION PROCESSING SYSTEM FOR MANAGING DOCUMENTS THEREIN

This invention relates to methods of managing documents in an electronic information processing system and more particularly, to a method of organising documents within the system.

In recent time, automation of offices is rapidly becoming a reality for an increasing number of organisations. Office automation helps the organisations integrate data files with text, store and retrieve correspondence and reports electronically, distribute documents electronically and support the day-to-day activities of administrative personnel, professionals and managers.

While some of the benefits of electronic document processing can be realized from a single, standalone office system, a network which connects office systems in various locations in the organisation increases the productivity of the organisation. Physically, a network is a combination of interconnected pieces of equipment and programs used for moving information between points where it may be generated, processed, stored and used. From the viewpoint of an user of the network, the network is a collection of services which are useful in creating, revising, distributing, filing and retrieving documents.

In today's electronic office, documents are physically grouped using one of two following techniques: partition data sets and directories. Partition data sets are storage areas on a disk or other form of storage medium. Documents stored in a partition data set only exist in that storage area and a partition data can not be deleted until all of the documents included therein have been removed. Generally, the documents are filed in the partition data set in the order created and there is no other relationship regarding the order to the documents.

Directories are similar to partition data sets in that they are physical storage areas for documents for files. Documents can not exist in more that one physical storage area. The documents contained in a directory are not logically organised.

In regards to both the partition data sets and the directories, if one filed a group of documents which are related to a general topic and one wanted to review the group of documents, one would have to first locate the partition data set or sets or the directory or directories containing the documents. Moreover, in partition data sets and directories, documents have to be deleted from the bottom up. Additionally, it is very difficult to rearrange documents stored using these two schemes. In order to arrange, the documents have to be copied and then deleted. This type of retrieval technique reduces the efficiency of the electronic office.

Consequently, what is needed is a technique for storing documents have a logical order wherein all of the documents can be operated on with a single command and in the logical order stored.

According to the invention, there is provided a method of operating an electronic information processing system for organising data, in the form of documents, within the system, comprising the steps of identifying a plurality of documents stored in the system; establishing order criteria for the identified documents; and creating and storing a folder comprising said identified documents positioned in accordance with said order criteria.

An embodiment of the invention will now be described, by way of example, with reference to the accompanying drawings, in which:

Fig. 1 is a block diagram of an information processing system;

Fig. 2 is a model of a document showing the various objects associated with a document stored in the system of Fig. 1;

Figs. 3 to 6 are object structures which are employed in generating a folder document; and

Figs. 7 to 17 are various flow charts illustrating detailed steps of a method embodying the present invention.

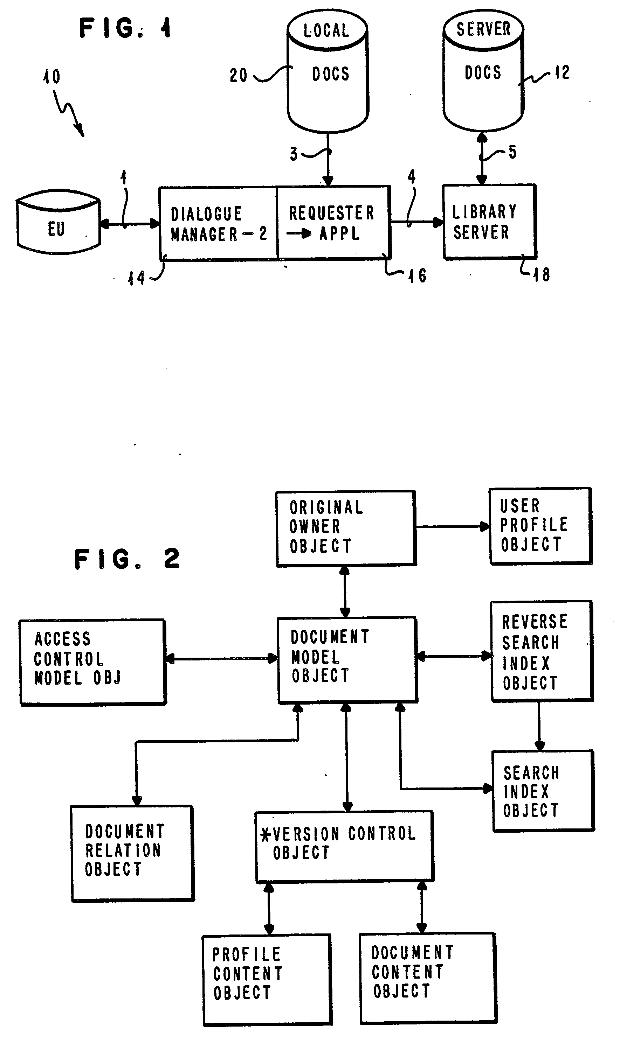

Fig. 1 shows a document management system 10 for controlling the creation, retrieval, editing and distribution of documents within an information processing system. Moreover, the document management system 10 enables an end user (EU) to store a collection of documents as a folder. In essence, the folder, which is also a document, is created and the documents which are to be stored therein are identified. The end user also specifies the order which the documents will be stored within the folder. Thus, the EU creates the folder and files it into a library 12. Subsequent operations involving the folder created can be performed on the entire folder without retrieving all of the individual documents stored therein. The EU interacts with a dialog manager application 14 which provides all of th data or screens necessary to create the folder with the documents. For example, the dialog manager application will present a screen which request the EU to enter any access control for the folder, any contextual-search characteristics, the identification of a requester/principle of the folder, and the definition of the folder. The definition of the folder includes an ordering criteria for the documents to be included in the folder, an indication that a document is included in a particular folder, any document-in-folder attributes of the document to be filed including whether or not history is to be maintained on the document and any pointers or addresses of the physical location of all of the documents to be filed in the folder. These documents can be directly accessible to a requester application program 16 or accessible to the requester's library server 18. After the dialogue manager application 14 has gather the above-identified information, it transmits the information to the requester application program 16.

The requester application application program 16, in response to input from the dialogue manager application 14, builds a request in the form of a file and transmits the request to the library server 18. The requester application program 16 makes a copy of each of the documents identified by the EU which are accessible in a local storage medium 20. The copies of the documents are transmitted to the library server 18 along with the request. Additionally, the requester application program 16 transmits pointers to the physical location of all of the documents to be filed. All of the documents in the local storage medium 20 will be transmitted with the request. The requester application program 16 also transmits pointers to other documents to be filed which are accessible to the library server 18 on the server storage medium or library 12.

The library server 18 files the folder into the server storage medium 12 as specified by the EU. Access control will be established and any contextual-search characteristics will be enabled as specified. The documents transmitted with the folder request will be filed with the appropriate access control and contextual-search characteristics. Data objects associated with the folder document will be established to reflect the ordering criteria and the order of the documents filed in the folder. The history attributes for the folder document will be established and any history attributes for any of the documents filed therein will be established. Thereafter, the data objects associated with the documents contained in the folder document will be set to reflect that the document is contained within the folder document.

The document management system 10 shown in Fig. 1 utilizes a uniform structure for exchanging information within the system. This structure includes an encoding scheme which is designed to convey any document, irrespective of it content, from one type of office system to another and to communicate the intent of the person creating or transmitting a document as to the method of processing thereof. One type of structure which meets all of these requirements is the Document Interchange Architecture (DIA) which is a part of a DISOSS office system marketed by the International Business Machines Corporation.

DIA is a program-to-program communication architecture which defines the protocols and data structures that enable programs to interchange information such as documents and messages in a consistent and predictable manner. DIA is independent of the type of information managed by DIA services. DIA includes documents objects which contain parameters or descriptors that describe the contents of the information being transmitted. The descriptors contained in the objects include the name under which the information is to be filed, the authors, the subject of the information and the date the information was filed in the document history. These descriptors enable a document to be searched in a storage medium such as the server library 12.

The server library 12 performs various services for the system 10. These services are used for storing and retrieving documents electronically. Whenever a document is filed in the server library 12, a set of descriptors called a document profile is filed with it. The profile contains the descriptors noted above. Document profiles are used in searching for documents in the library 12. For purposes of illustration and not limitation, a EU can ask the system 10 to search for all documents regarding a particular subject and by a certain author which was filed in the library 12 between any two dates. Upon completing the search, the system presents the EU with a list of the documents which meet the search criteria. The EU could then ask the system 10 to retrieve a copy of a specific document on the list from the library an deliver the copy the EU for printing or viewing.

The server library 12 also provides the following services: file documents in and retrieve or delete documents from the library; update work in progress documents in the library; specify a security level to associate with the document that is being filed; allow authorized end users other than the EU who filed the document to retrieve the document from the library and perform searches for and retrieve documents in the library for other end users. The server library 12 assigns each new document filed in therein a unique name called a library-assigned document name (LADN). This name is returned to the requester and can be used to uniquely identify the document at some later time.

Referring to Fig. 2, each document stored in the server library 12 includes the objects shown therein. All of the objects shown in Fig. 2 are created in response to the processing a FILE command. A document model object contains information concerning ownership and attributes of a specific document. This object controls the access to the document during its life in the library.

An original owner object contains or points to information used by an owner of the document to control access to the document as filed.

A document content object provides for the storage of the document content and for saving information relating to the actual size of the filed document.

A document relation object describes the logical relationships between the document and other documents. If the document is a folder, each of the documents contained therein has a pointer or LADN entry in this object. If this document is in one or more folders, then each folder has a pointer or LADN entry in this object. Enter and remove history may be maintained for the document either as a folder or as a document in other folders.

An access control model object is created when the document owner authorizes other users to access the document.

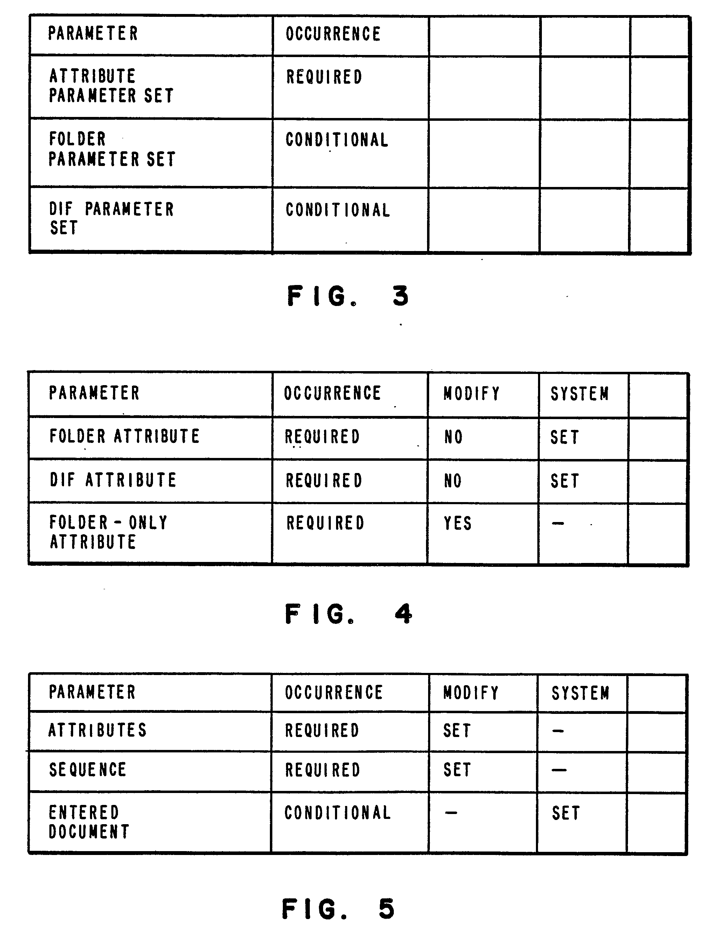

Structures for all of the above-identified objects except document relations object are a part of the DISOSS office system and will not be described herein. Fig. 3 shows the structure of the document relation object which consists of the following: an attribute parameter set and a folder document section, a document-within-a-folder section.

The attribute parameter set indicates whether or not the document associated with the document relation object is a folder or whether or not the document is a 'folder-only' document. Fig. 4 illustrates the structure for the attribute parameter set.

The folder attribute indicates whether or not the document associated with the document relation object is a folder. If the document is a folder, then a folder section parameter set is required. A DIF (document in folder) attribute indicates whether or not the document is contained within any folders. A folder-only attribute indicates whether or not the document can be viewed as existing on its own when it is included within a folder. Documents are viewed as folder-only when both the DIF and Folder-only attributes are positively set.

A physical document in a physical folder is a folder-only document. In essence, the physical document exists in the folder and can not stand on its own. However, electronic documents can logically exist in multiple places at the same time. Therefore, a document can appear to be in more than one folder and standing on its own all at the same time. Whether or not the document can stand on its own when it is also in a folder is indicated by the folder-only attribute. Folder-only documents are viewed as stand-alone when they are not contained by any folders.

The folder document section includes the following sections: folder attributes and entered document parameters set. The folder attributes indicates the folder characteristics such as ordering criteria and history. Each document entered into the folder document associated with the document relation object will have an entered document parameter set. Fig. 5 illustrates the structure for the folder document section. The attributes parameter allows for the specification of an open option and the history option. The folder is open so that documents can be entered into or removed from the folder after it has been filed in the server library 12. As documents are entered into and removed from the open folder, the history option is specified by an entered document parameter. The entered document parameter is deleted when a document is removed from the folder and is created when the same document is reentered into the folder. The removal date and time and the requester's ID are added to the entered document parameter set. When the document is re-entered into the folder, the date and time and the requester's ID is added to the entered document parameter set. Thus, the attribute parameter specifies the following folder characteristics: open or closed and history or no history. Folders with the option can have documents entered and removed. Folders with the closed option can not have documents entered or removed. Open folders with the history option will have a history in the Entered Document parameter set for those documents subsequently removed from or re-entered into the folder. Open folders with "no history" option have the Entered Document parameter set deleted when the document is removed from the folder and created when the document is subsequently re-entered.

The sequence option specifies how the documents within a folder are to be ordered and the manner the order is to be maintained as documents are entered into the folder. When a folder is distributed or retrieved, the order in which the contained documents are sent is the order specified by the sequence parameter set. The contained documents can be ordered by the user by position when filed and entered or by profile parameters either in ascending or descending order.

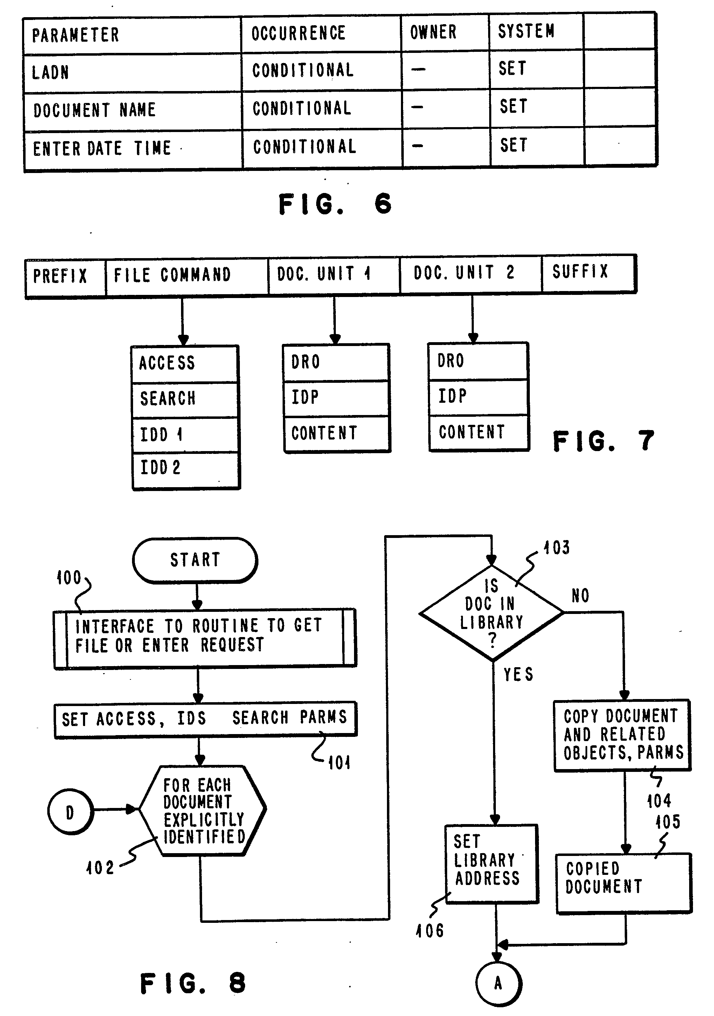

Fig. 6 shows the structure for the Entered Document parameter. The Entered Document parameter includes a LADN of each document entered into the folder, the user-assigned document name of the document entered into the folder, and the date and time that the document was entered into the folder or removed from the folder.

Fig. 7 shows a structure for a file command used by the present invention in creating the folder in the information processing system. The file command includes a file command section and at least one document unit section. The file command section includes information relating to any access and search criteria entered by the EU. For purposes of illustration and not limitation, the file command structure includes two document unit sections. Each of the document unit sections is associated with respective documents to be included in the folder. Thus, the number of the documents unit sections will vary depending on the number of documents to be included in the folder. Similarly, the file command section includes two identified data (IDD) operands. An IDD1 operand is associated with the first document, the folder, specified by the EU. The IDD1 operand includes a unique identifier for the folder within the context of the command and a physical pointer which points to document unit 1. An IDD2 operand is associated with the second document specified by the EU to be included in the folder. Similarly, the IDD2 operand includes a unique identifier for the second document within the context of the command, an indicator that the second document is to be entered into the folder document represented by IDD1 and a physical pointer which points to document unit 2. Document unit 1 includes a document relation object (DRO). The DRO includes any relation attributes, folder attributes, a folder table-of-contents framework which is empty if the folder is being created, and a document-in-folder table-of-contents framework which is also empty if the folder is being created. Document unit 1 further includes an interchange document profile (IDP) which contains descriptive information regarding the document. Document unit 2 includes also a DRO and an IDP. The DRO associated with document unit 2 includes relation attributes and a document-in-folder table-of-contents framework.

Set out below is an illustration of an application program useable by the requestor application in filing a folder in the information processing system. The program is in program design language from which source code and machine code are derivable.

```
REQUESTER PROC

     INPUT

          ACCESS CONTROL INFORMATION

          CONTEXTUAL-SEARCH CHARACTERISTICS

          DO FOR EACH DOCUMENT SPECIFIED IN THIS

               REQUEST
```

A POINTER TO THE PHYSICAL DOCUMENT
(PPTR) WHICH WILL BE THE LOCAL POINTER
OR THE LIBRARY IDENTIFIER.

A UNIQUE IDENTIFIER FOR THIS DOCUMENT
WITHIN THE SCOPE OF THIS REQUEST (DID).

A REFERENCE IDENTIFIER FOR EACH FOLDER
CONTAINING THIS DOCUMENT, IF THIS
DOCUMENT IS TO BE INCLUDED WITHIN A
FOLDER (RID).

A POSITION INDICATOR FOR THE POSITION
THIS DOCUMENT WILL TAKE IN THE
REFERENCED FOLDER, IF THIS DOCUMENT IS
TO BE INCLUDED WITHIN A FOLDER (POS).

ATTRIBUTES FOR THE DOCUMENT (HISTORY).

ATTRIBUTES FOR THE FOLDER (HISTORY,
ORDER, OPEN), IF THE DOCUMENT IS A
FOLDER.

```
        ENDDO
PROCESS
        SET THE ACCESS CONTROL
        SET THE CONTEXTUAL-SEARCH CHARACTERISTICS
        SET THE REQUESTER AND PRINCIPAL IDENTIFIERS
        DO FOR EACH DOCUMENT (IDD OR RDD) EXPLICITLY
                SPECIFIED IN THE REQUEST
                        IF THE DOCUMENT DOES NOT EXIST IN
                                THE LIBRARY,
                                        THEN
                                                COPY THE DOCUMENT.

                                        SET THE DOCUMENT
```

ADDRESS TO POINT TO
THE POSITION OF THE
DOCUMENT IN THE
REQUEST UNIT.

SET UP THE DATA
OBJECT (DRO) WHICH
WILL CONTAIN THE
UNIQUE LIBRARY
IDENTIFIER FOR THE
FOLDERS WHICH
CONTAIN THIS
DOCUMENT.

SET THE
DOCUMENT-IN-FOLDER
ATTRIBUTES
(HISTORY) IN THE
DRO AS SPECIFIED.

IF THE DOCUMENT IS A FOLDER,
    THEN
        SET THE FOLDER
        ATTRIBUTES
        (HISTORY, ORDER,
        OPEN) IN THE DRO AS
        SPECIFIED.

        SET UP THE DATA
        OBJECT WHICH WILL
        CONTAIN THE UNIQUE
        LIBRARY IDENTIFIERS
        FOR THE DOCUMENTS
        CONTAINED WITHIN
        THIS FOLDER.

```
                    ENDIF

                ENDIF

                SET SPECIFIED IDENTIFIER FOR THIS

                    DOCUMENT

                DO FOR EACH FOLDER (RID)

                    CONTAINING THIS DOCUMENT

                    SET THE RID FOR THIS FOLDER

                    FOR THIS IDD OR RDD.


                    IF A POSITION IS EXPLICITLY

                        SPECIFIED FOR THIS

                        DOCUMENT WITHIN THIS

                        FOLDER,

                        THEN

                            SET SPECIFIED

                            POSITION (POS) FOR

                            THIS DOCUMENT

                            CORRESPONDING TO

                            THIS RID.

                    ENDIF

                ENDDO

            ENDDO

        END REQUESTER PROC
```

When the requester application program 16 receives data from the dialogue manager 14, it builds operands specifying the access contextual-search characteristics, requester and principal identifiers for all of the documents filed with this request. For each document passed with the request, the IDD operand is built. If the document presently exist in the library 12, only the RDD operand is built. Both operands include the following: a pointer (PPTR) to the physical location of the document wherein the RDD will contain a library pointer and the IDD will contain a pointer to the local storage medium 20 contained within the request; a unique document identifier within the scope of the command (DID); references to the folder or folders containing each of the documents (RID = DID of the folder); and positions (POS) for each of the documents within the referenced RID folders. The requester application program 16 then builds the IDD operand for each new document. Data areas associated with each of the documents are then built and included in the DRO. A document-in-folder table of contents (DIFTOC) contains the data for the documents contained in the folder. Additionally, the DRO contains the history attribute for the documents contained within the folder.

Set out below is an illustration of an application program useable by the library server 18 in filing a folder in the information processing system. The program is in program design language from which source code and machine code are derivable.

```
BEGIN LIBRARY SERVER PROC
    INPUT
            ACCESS CONTROL INFORMATION FROM REQUESTER
            APPLICATION.
            CONTEXTUAL-SEARCH INFORMATION
            REQUESTER/PRINCIPLE IDENTIFIERS.
            DO FOR EACH DOCUMENT SPECIFIED IN THIS
                REQUEST AN IDD OR A RDD OPERAND WHICH
                INCLUDES:
                A POINTER TO THE PHYSICAL DOCUMENT
                (PPTR) WHICH WILL BE EITHER THE LOCAL
                POINTER (IDD OPERAND) OR THE LIBRARY
                IDENTIFIER (RDD OPERAND).

                AN UNIQUE IDENTIFIER FOR THIS DOCUMENT
                WITHIN THE SCOPE OF THIS REQUEST (DID).

                A REFERENCE IDENTIFIER FOR EACH FOLDER
                CONTAINING THIS DOCUMENT, IF THIS
                DOCUMENT IS TO BE CONTAINED WITHIN A
                FOLDER (RID).
```

A POSITION INDICATOR FOR THE POSITION
THIS DOCUMENT WILL TAKE IN THE
REFERENCED FOLDER, IF THIS DOCUMENT IS
TO BE CONTAINED WITHIN A FOLDER (POS).

A DOCUMENT RELATION OBJECT (DRO)
CONTAINING THE FOLLOWING:
    DOCUMENT RELATION ATTRIBUTE.
    ORDERING CRITERIA AND OTHER FOLDER
    ATTRIBUTES, IF THE SPECIFIED
    DOCUMENT IS A FOLDER TO BE CREATED
    WITH THIS REQUEST.
    DOCUMENT-IN-FOLDER ATTRIBUTES.
    A DOCUMENT-IN-FOLDER
    TABLE-OF-CONTENTS (DIFTOC) AREA
    WHICH WILL BE SET UP BUT WILL NOT
    CONTAIN ANY ENTRIES.
    A FOLDER TABLE-OF-CONTENTS (FTOC)
    AREA WHICH WILL BE SET UP BUT WILL
    NOT CONTAIN ANY ENTRIES.
ENDDO
PROCESS
    CALL BUILD TABLE PROC FOR DID/LADN AND
    RID/DID TABLES.
    DO FOR EVERY FOLDER (RID ENTRY):
        DO FOR EVERY DOCUMENT (DID) TO BE
            PLACED IN THIS FOLDER
            FIND THE ENTRY POSITION FOR THIS
            DID ACCORDING TO THIS FOLDER'S
            ORDERING CRITERIA IN THE FOLDER'S
            TABLE-OF-CONTENTS.
            ENTER THE LADN ASSOCIATED WITH
            THIS DID IN THE FOLDER'S
            TABLE-OF-CONTENTS.

```
                    IF HISTORY IS SPECIFIED FOR THIS
                    FOLDER,
                        THEN
                                SET THE REQUESTER'S ID IN THE
                                HISTORY PORTION OF THE ENTRY.
                                SET THE PRINCIPLE'S ID IN THE
                                HISTORY PORTION OF THE ENTRY.
                                SET THE CURRENT DATE AND TIME
                                IN THE HISTORY PORTION OF THE
                                ENTRY.
                    ENDIF
                    ENTER THE LADN ASSOCIATED WITH
                    THIS FOLDER (RID) IN THE
                    DOCUMENT-IN-FOLDER
                    TABLE-OF-CONTENTS.
                    IF HISTORY IS SPECIFIED FOR THIS
                    DOCUMENT,
                        THEN
                                SET THE REQUESTER'S ID IN THE
                                HISTORY PORTION OF THE ENTRY.
                                SET THE PRINCIPLE'S ID IN THE
                                HISTORY PORTION OF THE ENTRY.
                                SET THE CURRENT DATE AND TIME
                                IN THE HISTORY PORTION OF THE
                                ENTRY.
                        ENDIF
                    ENDDO
                ENDDO
            END PROCESS
        END LIBRARY SERVER PROC
```

As noted above, each document operand (RDD or IDD) has the unique identifier (DID) assigned thereto. The library server 18 then gets a LADN for every document explicitly specified in the request. A BUILD TABLE PROC is called to build a temporary table to match every DID to an associated LADN. Moreover, each document operands which corresponds to a document that will be placed into the folder includes a reference (RID) to the folder's unique document identifier DID. The RID with the document operand is set to the value of the folder operand's DID. The library server 18 then facilitates the building of a temporary table containing an entry for every folder referenced. Each folder entry will contain a list of DIDs representing the documents which are included within the folder. Each DID will be associated with an operand number (OPN) and a position (POS) in the folder. OPN is calculated by the library server since the original order of the operands may be used to determine the position of the documents within the folder if the POS value is not explicitly set by the requester application program 16.

For purposes of illustration and set forth in the table below, a folder with a DID of 1 contains two documents with DIDs of 2 and 3 in that order. A folder with DID of 4 contains two documents with DIDs of 2 and 5 in that order. The document operand for the DID = 2 document contains 2 RIDs. One for the folder defined with the document operand associated with DID = 1 and another for the folder associated with DID = 4. Additionally, the document operands are in the same order as the DID specification.

| RID | DID/POS/OPNs | |
|-----|------|------|
| 1 | 2/1/2 | 3/2/3 |
| 4 | 2/1/2 | 5/2/5 |

Set out below is an illustration of an application program useable by the library server 18 in building the DID/LADN and RID/DID tables. The program is in program design language from which source code and machine code are derivable.

```
BEGIN BUILD TABLES PROC
    SET OPN TO A VALUE OF 1
    DO FOR EACH DOCUMENT SPECIFIED IN THE REQUEST:
        IF THE DOCUMENT DOES NOT EXIST IN THE
```

```
LIBRARY,
   THEN
         COPY THE DOCUMENT AND ITS RELATED
         OBJECTS INTO THE LIBRARY.
         ASSIGN A UNIQUE LIBRARY IDENTIFIER TO
         THIS DOCUMENT (LADN).
            ELSE
                OBTAIN THE UNIQUE LIBRARY
                IDENTIFIER FOR THIS DOCUMENT
                (LADN).
   ENDIF
   SAVE THE UNIQUE IDENTIFIER FOR THE REQUEST
   (DID) WITH THE UNIQUE LIBRARY IDENTIFIER
   (LADN) IN DID/LADN TABLE.
   DO FOR EACH FOLDER REFERENCED (RID) BY THIS
      DOCUMENT OPERAND:
         IF THERE IS NO ENTRY IN THE RID/DID
            TABLE,
             THEN CREATE AN ENTRY FOR THIS RID
         ENDIF
         SET DID IN RID/DID TABLE
         IF POS IS SET, THEN
             SET POS IN RID/DID TABLE
                ELSE, SET POS = HIGHEST POSSIBLE
                    VALUE + 1 IN RID/DID TABLE
         ENDIF
         SET OPN IN RID/DID TABLE
   ENDDO
   SET OPN TO OPN + 1
         ENDDO
      END BUILD TABLE PROC
```

The library server 18 must keep track of the order in which document operands are specified. In positionally ordered folders wherein the position is not specified, the original operand order is the order in which the documents are placed in the folder. The library server 18 then builds an entry in the temporary table for every document specified in the IDD or RDD operand. Each entry matches a DID to a LADN. In addition, if the current document operand references a folder in which it will be included, the RID/DID temporary table is updated. The library server 18 then process the IDD if the document does not exist in the library 12. The document is then filed in the library 22 along with its associated data areas which includes the DRO and assigns a new LADN to the document. Thereafter, the library server 18 process the RID if the document does exist in the library 12 and builds the DID/LADN and the RID/DID entries in the temporary table. Document operands without a POS set that are placed in positionally ordered folders, go

13

into the folder after the last document currently in the folder. The OPN is then updated for the next operand.

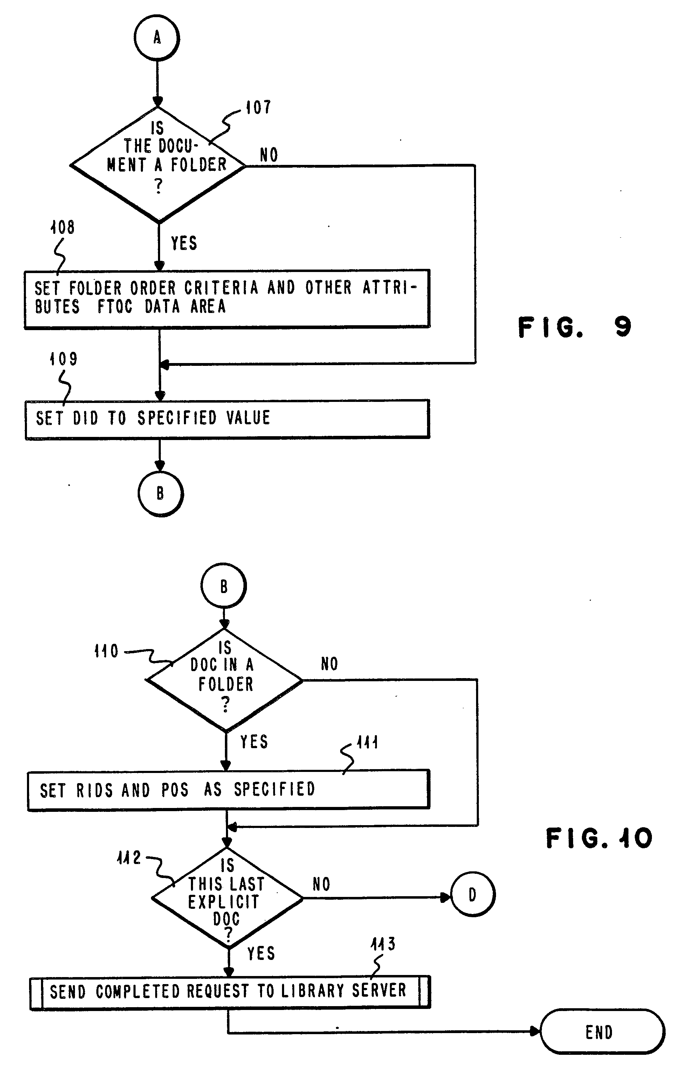

Figs 7, 8 and 9 show a flow chart for the requester application program 18 in filing a folder in the information processing system. First, the application program 18 in step 100 interfaces with the dialogue manager to get the request. The access information, identifiers and search parameters are set in step 101. In steps 102 and 103, a determination is made whether each of the documents specified in the request exist in the library 12. If the documents do not exist in the library 12, a copy of the document and its related objects is made in steps 104 and 105. If the documents exist in the library 12, the library address is set in step 106. Step 107 determines whether each of the specified documents is a folder. Step 108 sets the folder order criteria and other folder attributes and the DID is set to a specified value in step 109. If a specified document in step 107 is not a folder, the DID is set to a specified value in step 109. In step 110, a determination is made whether each of the documents are included in an existing folder. If the document id a folder, the RIDs and POS are set in step 111 otherwise, control is transferred to step 112. In step 112, a determination is made whether the document is the last document specified in the request. If there are other documents to be processed, control is transferred to step 102. Otherwise, the requester application program 16 transmits the complete request to the library server 18 in step 113.

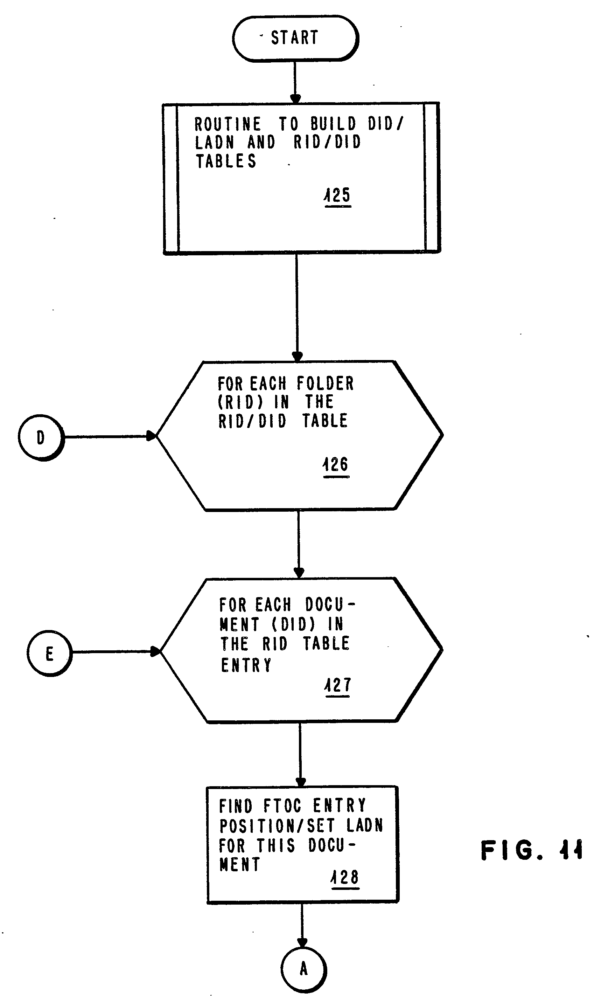

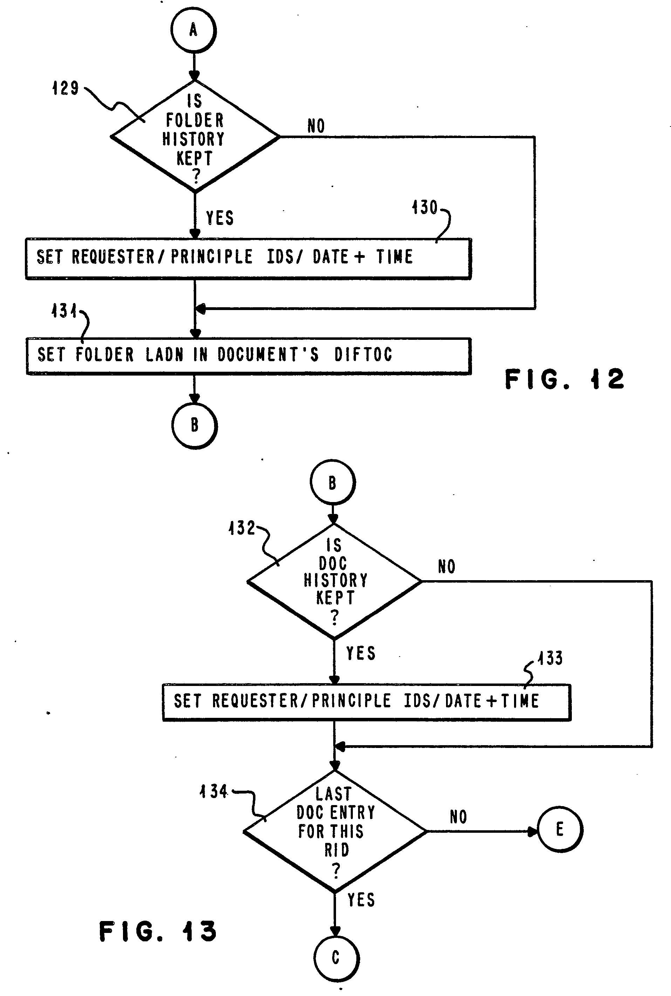

Referring to Figs. 10 to 13, there is illustrated a flow chart for the library server 18 in filing the folder in the library 12. In step 125, the library 18 server call the build tables routine to build the DID/LADN and RID/DID tables. In steps 126, 127 and 128, for each folder RID and each document DID in the RID/DID table, find folder table-of-contents entry position and set the LADN for this document. In step 129, if a folder history is to be maintained, the IDs of the requester and principal and the current date and time are set in step 130. The folder LADN are entered in the document-in-folder table-of-contents in step 131. In step 132, a determination is made as to whether a document history is to be maintained. The requester's ID and principal's ID and the date and time are set in step 133 if the document history is to be maintained. Step 134 determines if the last document entry has been processed for the RID. If there are other document entries to be processed, control is transferred to step 127. Otherwise, step 135 determines if the last RID in the RID/DID table has been processed. If there are other RIDs to process, control is transferred to step 126.

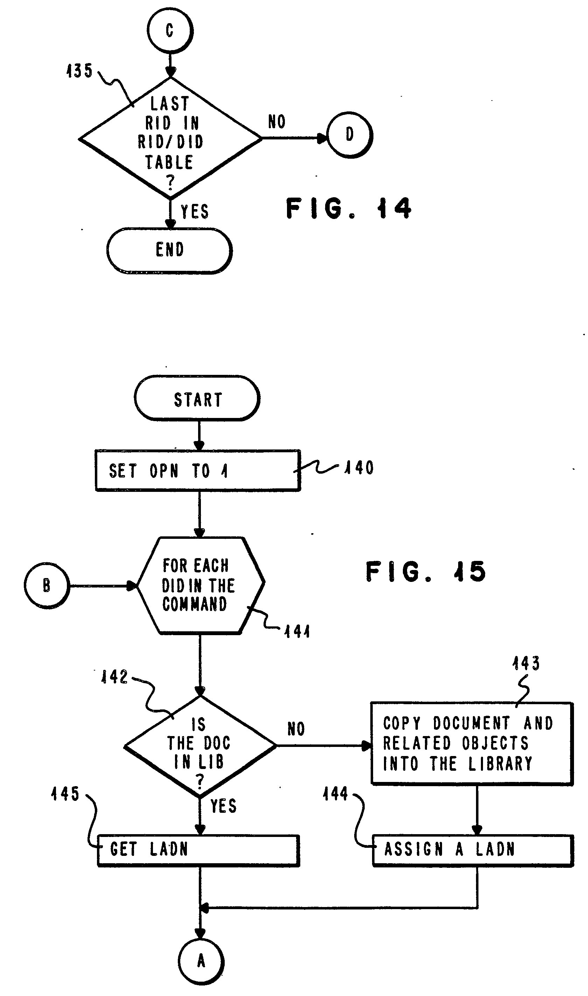

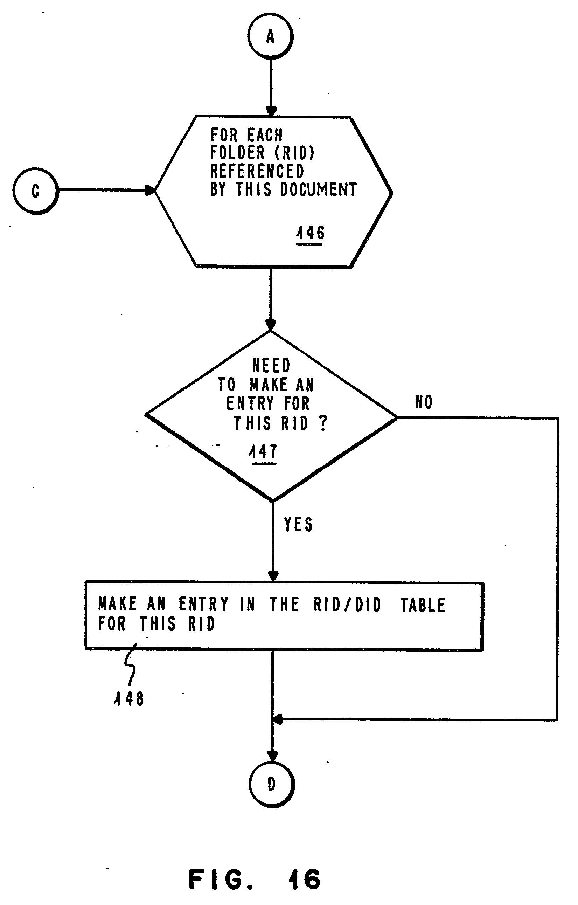

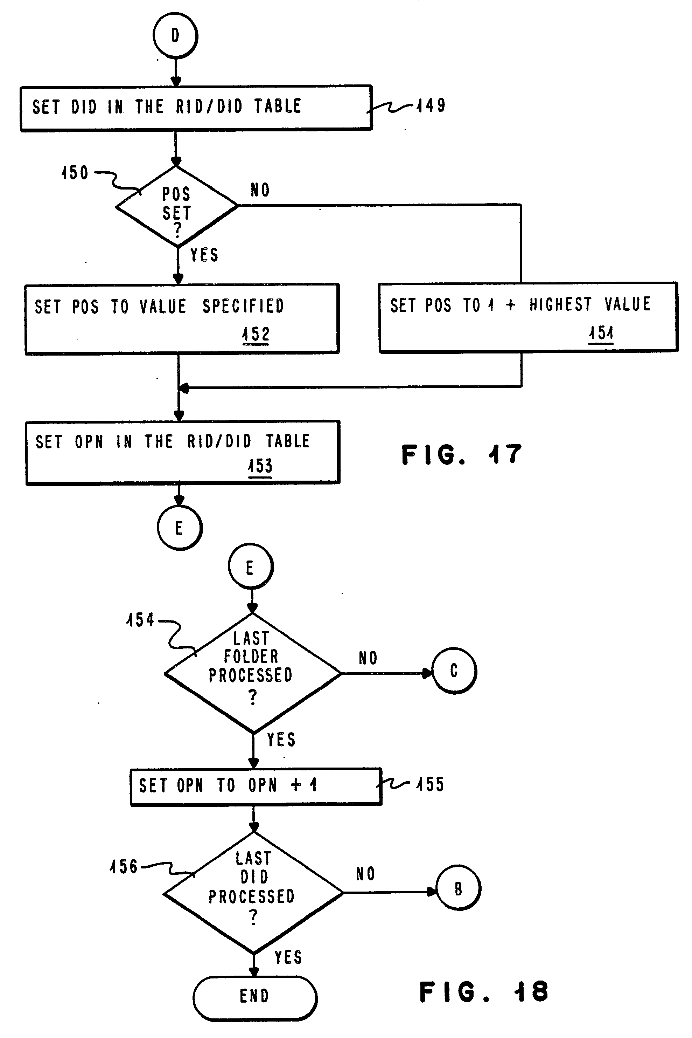

Referring to Figs. 14 to 17, there is illustrated a flow chart for the build table routine in generating the RID/DID and DID/LADN tables. As noted above, the build table routine is called by the library server 18. In step 140, the OPN is set to a value of one. For each DID in the call, a determination is made in steps 141 and 142 whether the document associated with each respective DID exists in the library 12. If the document is not in the library, a copy of the document and its related objects is made in step 143 and a LADN is assigned in step 144. Otherwise, the LADN for the document filed in the library 12 is fetched in step 145. For each folder RID referenced by the document, in steps 146 and 147, a determination is made as to whether an entry has to be made in the RID/DID table. An entry is made in the RID/DID table in step 148 if required. The DID is entered in the RID/DID table in step 149 and a determination is made in set 150 as whether the position indicator (POS) has been set. The POS is set to a value of one plus the highest possible value in the RID/DID table in step 151. If the POS has been previously specified, POS is set to the value specified in step 152. The document operand OPN is then set in the RID/DID table in step 153. In step 154, a determination is made whether the last folder has been processed. Control is transferred from step 154 to step 146 to process any remaining folders. Otherwise, OPN is incremented by a value of one in step 155. Step 156 determines whether the last DID has been processed. Control is transferred from step 156 to step 141 to process any remaining DIDs.

In summary, what has been described is a method of generating a folder in an information processing system for managing a group of documents included in the folder. An end user indicates the documents to be included in the folder, any search criteria, access control information, the logical relationship of the documents and the identification of the end user and/or the principal. The system then creates the folder and includes the specified documents therein in the order specified by the end user. Thereafter, when the folder can be requested, the documents will be transmitted therewith in the order established.

## Claims

1. A method of operating an electronic information processing system for organising data, in the form of documents, within the system, comprising the steps of:
identifying a plurality of documents stored in the system;
establishing order criteria for the identified documents; and
creating and storing a folder comprising said identified documents positioned in accordance with said order criteria.

2. A method according to claim 1 including the further step of:
establishing a plurality of document attributes for each document included in the folder.

3. A method according to claim 2 including the step of:
invoking a history option for each document included in the folder.

4. A method according to claim 2 or claim 3 including the step of:
maintaining a log in the system for recording each document entry into, or removal from, a folder.

5. A method according to any one of the previous claims in which the system includes a first and a second data storage medium, and including the further step of:
determining whether a document to be included in a folder is stored in the first medium; and, if so, copying the document and its associated identifier data into the folder in the second storage medium.

## FIG. 1

10

LOCAL DOCS
20

SERVER DOCS
12

EU
1

| DIALOGUE MANAGER − 2 | REQUESTER → APPL |

LIBRARY SERVER

3

5

4

14

16

18

## FIG. 2

ORIGINAL OWNER OBJECT

USER PROFILE OBJECT

ACCESS CONTROL MODEL OBJ

DOCUMENT MODEL OBJECT

REVERSE SEARCH INDEX OBJECT

DOCUMENT RELATION OBJECT

*VERSION CONTROL OBJECT

SEARCH INDEX OBJECT

PROFILE CONTENT OBJECT

DOCUMENT CONTENT OBJECT

| PARAMETER | OCCURRENCE | | | |
|---|---|---|---|---|
| ATTRIBUTE PARAMETER SET | REQUIRED | | | |
| FOLDER PARAMETER SET | CONDITIONAL | | | |
| DIF PARAMETER SET | CONDITIONAL | | | |

**FIG. 3**

| PARAMETER | OCCURRENCE | MODIFY | SYSTEM | |
|---|---|---|---|---|
| FOLDER ATTRIBUTE | REQUIRED | NO | SET | |
| DIF ATTRIBUTE | REQUIRED | NO | SET | |
| FOLDER - ONLY ATTRIBUTE | REQUIRED | YES | — | |

**FIG. 4**

| PARAMETER | OCCURRENCE | MODIFY | SYSTEM | |
|---|---|---|---|---|
| ATTRIBUTES | REQUIRED | SET | — | |
| SEQUENCE | REQUIRED | SET | — | |
| ENTERED DOCUMENT | CONDITIONAL | — | SET | |

**FIG. 5**

| PARAMETER | OCCURRENCE | OWNER | SYSTEM | |
|---|---|---|---|---|
| LADN | CONDITIONAL | — | SET | |
| DOCUMENT NAME | CONDITIONAL | — | SET | |
| ENTER DATE TIME | CONDITIONAL | — | SET | |

## FIG. 6

| PREFIX | FILE COMMAND | DOC. UNIT 1 | DOC. UNIT 2 | SUFFIX |
|---|---|---|---|---|

| ACCESS |
|---|
| SEARCH |
| IDD 1 |
| IDD 2 |

| DRO |
|---|
| IDP |
| CONTENT |

| DRO |
|---|
| IDP |
| CONTENT |

## FIG. 7

START

100
INTERFACE TO ROUTINE TO GET FILE OR ENTER REQUEST

SET ACCESS, IDS   SEARCH PARMS
104

D → FOR EACH DOCUMENT EXPLICITLY IDENTIFIED
102

103
IS DOC IN LIBRARY ?
NO
YES

COPY DOCUMENT AND RELATED OBJECTS, PARMS
104

105
COPIED DOCUMENT

SET LIBRARY ADDRESS
106

A

## FIG. 8

A

IS
THE DOCU-
MENT A FOLDER
?  107

NO

YES

SET FOLDER ORDER CRITERIA AND OTHER ATTRI-
BUTES  FTOC DATA AREA  108

SET DID TO SPECIFIED VALUE  109

B

**FIG. 9**

B

IS
DOC IN A
FOLDER
?  110

NO

YES

SET RIDS AND POS AS SPECIFIED  111

IS
THIS LAST
EXPLICIT
DOC
?  112

NO

D

YES

SEND COMPLETED REQUEST TO LIBRARY SERVER  113

END

**FIG. 10**

START

ROUTINE TO BUILD DID/
LADN AND RID/DID
TABLES

_125_

D ───▶ FOR EACH FOLDER
(RID) IN THE
RID/DID TABLE

_126_

E ───▶ FOR EACH DOCU-
MENT (DID) IN
THE RID TABLE
ENTRY

_127_

FIND FTOC ENTRY
POSITION/SET LADN
FOR THIS DOCU-
MENT

_128_

FIG. 11

A

FIG. 12

FIG. 13

FIG. 14

FIG. 15

FIG. 16

**FIG. 17**

**FIG. 18**